# EUROPEAN PATENT APPLICATION

(11) **EP 1 274 024 A1**
(43) Date of publication of application: **08.01.2003**
(21) Application number: 01116317.7
(22) Date of filing: 05.07.2001
(51) Int. Cl.: G06F 17/60

(54) **Method, computer programme, and device of handling data to be used for returning items**

(71) Applicant: CANON EUROPA N.V., NL-1185 XB Amstelveen (NL)
(72) Inventor: De Mol Van Otterloo, Maarten, Joost, 1185XB Amstelveen (NL); Asaoka, Nobuyoshi, 1185XB Amstelveen (NL); Otsuka, Sinichiro, 1185XB Amstelveen (NL); Nagasawa, Kenichi, 1185XB Amstelveen (NL)
(74) Representative: Leson, Thomas Johannes Alois, Dipl.-Ing.

(57) **Abstract**

This invention introduces, as one aspect, a method for handling data to be used for returning items; comprising steps of receiving information via a network from a device of a customer connected to the network, deciding whether each of a plurality of services is to be prepared or not in accordance with the information received in the receiving step, the plurality of services being individually used for returning items from the customer, preparing a page relating to the services based on the decision decided in the deciding step, and sending data of the page to a customer. Accordingly returning items is encouraged in any location where only a restricted returning service or services are available with a little additional cost.

## Description

### FIELD OF THE INVENTION

This invention relates to a method, a set of computer programmes and a device of handling data to be used for returning items. Especially, this invention relates, but not limited, to returning recyclable items containing consumables, such as toner cartridges, ink bottles and so on.

### BACKGROUND OF THE INVENTION

Recently, collecting recyclable items such as toner cartridges, inkbottles from customers become much more important. For instance, after using toner itself, empty cartridges obviously become disposals. However, some of parts can be reused and some manufacturers have already prepared a plant or a recycle centre to fabricate new toner cartridges filled by toner.

Then, the manufacturer can use such empty cartridge efficiently and can save costs. Also these activities also cause good for the environment and advertisements for these activities make customers conscious of importance on recycling.

One of ordinal method to collect such items is to enclose a pre-authorised label in a container of a new cartridge. Customers can use the label to return their consumed cartridges by using the label, namely the customers can bring empty cartridges to the carrier, for example a post office, a transport firm and so on, to send them to the predetermined plants or other destinations by free. Therefore, the label itself must be pre-authorised by the carrier and the manufacturer. The label has to have information of the name of the carrier, destination to be transported, and identification or certification representing pre-authorisation. This kind of service is called as "Label Return" hereinafter.

This kind of method has actually worked well and encouraged customers to return their empty cartridges.

Another ordinal method to collect such items is to send empty box from a local sales company or authorised dealer to customers so that the customer simply fill the box for fill the empty cartridges. Then the local sales company or authorised dealer collects the box filled by the empty cartridges. This kind of service is so-called as "Bulk return" hereinafter.

This method has also efficiently worked, especially for the customers who uses considerable number of cartridges regularly. However, these ordinal methods include some drawbacks as follows.

As for the Label Return service, the manufacturer has to make sure about customers' locations and suitable carrier service at the timing of shipping new cartridges and enclose suitable labels for each cartridge. Further, in a certain location or locations, the label may be unavailable by a certain reason. For example, the label written by a certain language or languages have not been made, the carrier does not exist in certain locations, the cost is too high to transport to the plants or recycle centers in certain locations, and so on. This obviously causes significant workload and relating costs, especially the manufacturer has to realise and understand where this service using the label is unavailable at the time of enclosing the label.

As for the Bulk Return, sending the box may be unavailable in a certain location or locations because of no local sales company or authorised dealer in a certain location or locations.

These kinds of unavailability for each service make the announcement to the customer more complicated and these services inefficient. Moreover, the workload of the manufacturer becomes much larger.

Secondly, this may cause customer's workload when the customer moves their location. Because, if certain services are not available in the new location of the customers, they may incorrectly ask or use previous using services again. This may cause huge difficulty of the customers and discourage their returning items.

Recently some ideas are raised by utilising the network and Web Sites. These ideas show the way to utilising Internet for collecting empty cartridges. The use of the Internet and Web Site resolves some of the drawbacks set out above.

In short, if the manufacturer can send a label or the local sales company can send a box to each customer via Web-Site, it is obvious to resolve the problem about workload confirming customer's location of the manufacturer for enclosing labels and workload surging a list of local sales companies or authorised dealers of the customer is solved.

However, this method cannot solve the problem caused by unavailability of services, especially when the customer moves as mentioned above.

### SUMMARY OF THE INVENTION

This invention had been done for resolving drawbacks describing above.

The object of this invention is to decrease workloads for both manufacturer and customers, even if a certain returning service or services are unavailable in certain locations.

Another object of this invention is to introduce a flexible returning system even when the customer moves with minimising the cost to encourage customers to return their consumed items without significant additional workloads of both the manufacturer and customer.

To accomplish the above objects, this invention introduces, as one aspect, a method for handling data to be used for returning items; comprising steps of receiving information via a network from a device of a customer connected to the network, deciding whether each of a plurality of services is to be prepared or not in accordance with the information received in the receiving step, the plurality of services being individually used for returning items from the customer, preparing a page relating to the services based on the decision decided in the deciding step, and sending data of the page to a customer.

As another aspect of this invention, this invention introduces a set of computer programmes to be used for returning items, comprising programme for receiving information via a network from a device of a customer connected to the network, programme for deciding whether each of a plurality of services is to be prepared or not in accordance with the information received in the receiving step, the plurality of services being individually used for returning items from the customer, programme for preparing a page relating to the services based on the decision decided in the deciding step, and programme for sending data of the page to a customer.

As further aspect of this invention, this invention introduces a device for handling data to be used for returning items, the device being connected to a network to which a device of a customer is connected, the device comprising, receiving means for receiving information via a network from a device of a customer connected to the network, deciding means for deciding whether each of a plurality of services is to be prepared or not in accordance with the information received by said receiving means, the plurality of services being individually used for returning items from the customer, preparing means for preparing a page relating to the services based on the decision decided by said deciding means, and sending means for sending data of the page to a customer.

According to these aspects, both of the manufacturer's workload and customer's workload would be significantly minimised with a little additional cost, even if a certain service or services are not available in certain locations. Also, even if the customer moves, the incorrect usage of the services would be minimised.

These aspects may be realised by, for example, receiving information relating to location of the customer. For example, such information relating to location includes information of address input by the customer, information of country input by the customer, or information of language selected by the customer.

These aspects may also be realised by, for example, receiving information relating to items to be returned. For example, such information relating to the items may include a number of items to be returned, or a kind of item to be returned.

These aspects may also be accomplished with a service sending a label to be printed and to be used for returning items. The service sending the label may be decided to be prepared in accordance with the information relating to location.

These aspects may also be accomplished with a service sending a box to be returned with a plurality of items to be contained therein. The service sending the box may be decided to be prepared in accordance with the information relating to location or the information relating to items.

These aspects may also be accomplished with automatically selecting one off the services to be prepared in accordance with the information received from the customer and may also be accomplished with deciding whether the selected one of the services is to be prepared or not in accordance with the information received from the customer.

Other features or aspects would be clarified by following detailed embodiments with reference to the drawings.

### BRIEF DESCRIPTION OF THE DRAWINGS

Figure 1 shows a block diagram showing elements of an example of a whole network system in which this invention is implemented.
Figure 2 shows a time chart of processes carried out for sending Web-pages for services to the customer in the system shown in Figure 1.
Figure 3 shows a flow chart representing programmes executed by the server of the manufacturer shown in Figure 1 to realise the processes shown in Figure 2.
Figure 4 shows a displayed page for customers, by the programmes corresponding to Figure 3, to be used for inputting whether the customer has been already registered or not.
Figure 5 shows a displayed page for customers, by the programmes corresponding to Figure 3, to be used for inputting customer's information.
Figure 6 shows a displayed page for customers, by the programmes corresponding to Figure 3, to confirm the registration.
Figure 7 shows a displayed page for customers, by the programmes corresponding to Figure 3, to be used for inputting registered information of the customer.
Figure 8 shows a flow chart representing one example of programmes carrying out services shown in Figure 3 executed by the server of the manufacturer shown in Figure 1.
Figure 9, 10, 11 and 12 show displayed pages by the programmes corresponding to Figure 8, to select an available service.
Figure 13, shows a label printed in accordance with the programmes corresponding to Figure 8.
Figure 14, shows a displayed page by the programmes corresponding to Figure 8 to have a service utilising a box to be filled up by items.
Figure 15 shows a flow chart representing another example of programmes carrying out services shown in Figure 3 executed by the server of the manufacturer shown in Figure 1.
Figure 16 shows a time chart of processes carried out for checking a label to be used in the system shown in Figure 1.
Figure 17 shows a flow chart representing programmes executed by the server of the manufacturer shown in Figure 1 to realise the processes shown in Figure 16.

### DETAILED DESCRIPTION OF PREFERRED EMBODIMENTS

To make it easy to implement this invention, only some of embodiments or aspects of this invention is described as below.

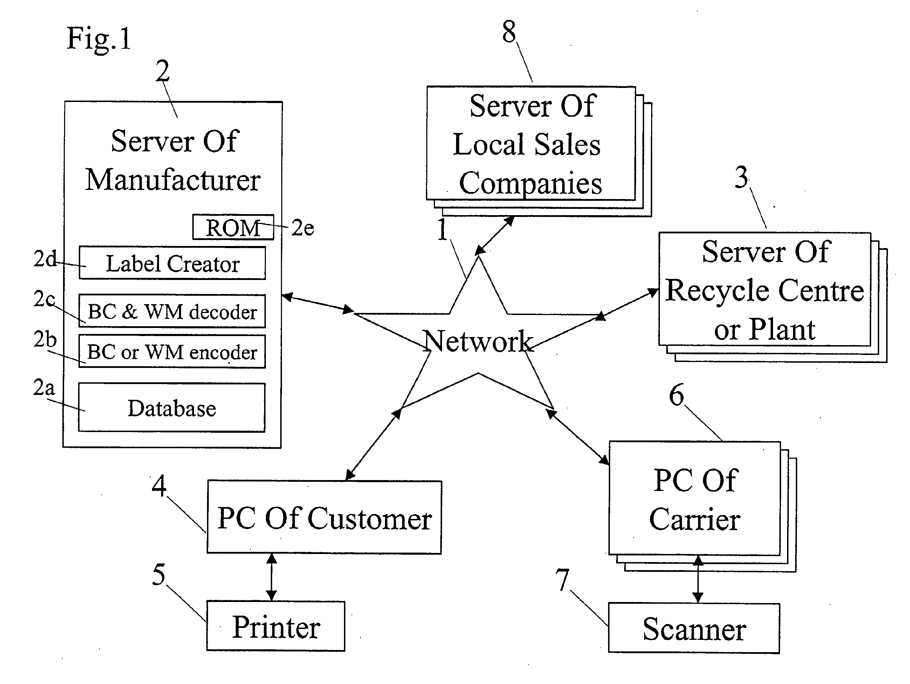

Figure 1 shows a network system connected to a plurality of computers located in some instruments. In this specification, word "computer" will sometimes to be used as a central processing unit (CPU) itself or one including surrounding hardware and software. According to this embodiments, a network 1 shall connect at least a computer located in a server of manufacturer (hereinafter "Manufacturer Server") 2, a computer located in a personal computer of the customer (hereinafter "Customer PC") 4, computers located in servers of the recycle centres or plants (hereinafter "Plant Server") 3, computers located in personal computers of the carriers (hereinafter "Carrier PC") 6 and computers located in servers of the local sales companies (hereinafter "LSC Server") 8.

The personal computer used in this specification means a set of instruments including a display, an input device, such as a keyboard and a mouse, a CPU, a disc drive and others inherently included in the personal computer. Customer PC 4 is connected to a printer 5 and Carrier PC 6 is connected to a scanner 7.

The server used in this specification means a set of devices including a computer and other electric instruments prepared so as to create a Web Site producing one or more Web Page composed of texts, pictures, photographs, and/or objects to be displayed. The Manufacturer Server 2 includes a database 2a in which information of the customer is stored, an encoder 2b for encoding information to create barcodes (BC) and watermarks (WM), a decoder 2c for decoding BC and WM for restoring the original information, and a label creator 2d for creating image data of the label to be sent including the information encoded by the encoder 2b.

Programmes, which control processes executed by the Manufacturer Server, are stored in a ROM 2e, located in the Manufacturer Server 2, and are read in accordance with proceeding processes. Similarly, programmes controlling processes executed by the Customer PC 4, the Carrier PC 6, LSC Server 8 and the Plant Server 3 are stored therein, although memories are not shown in the Customer PC 4, the Carrier PC 6, LSC Server 8 and the Plant Server 3 of the Figure 1.

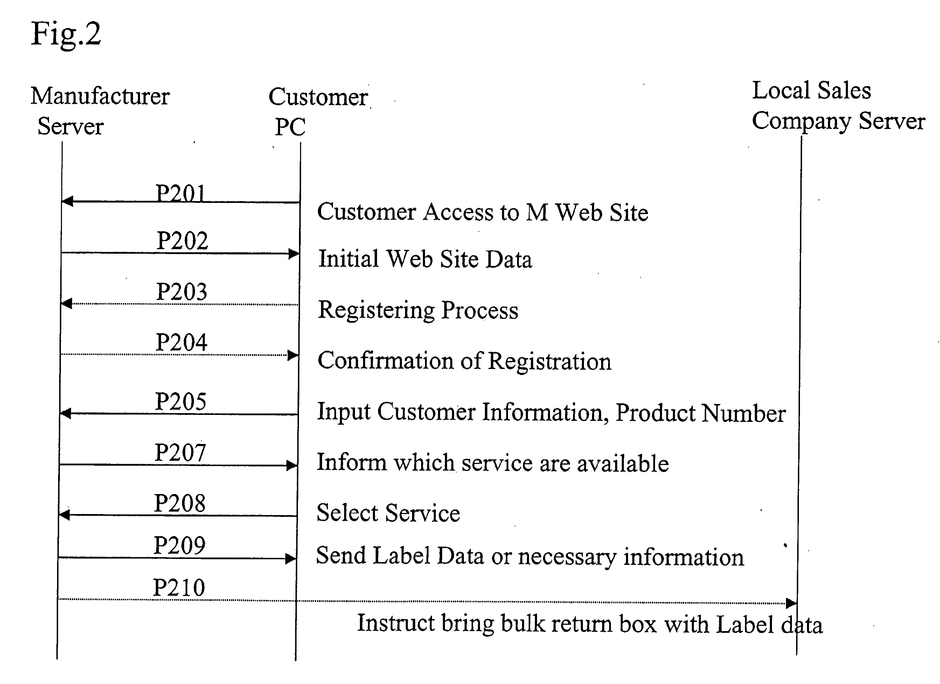

Firstly, for making understanding easy, rough processes are described by referring Figure 2. Figure 2 represents order of processes, which have to be carried out for sending a label to the Customer PC 4 in the system shown in Figure 1. A process P201 represents an access made by the customer (Customer PC 4) and a process P202 represent sending an initial Web Page to the Customer PC 4.

If the customer has already been properly registered, the customer can input its information in a process P205. However, if the customer has not been registered, registering processes P203 and P204 are taken. The process P203 represents sending information necessary to register the customer and the process P204 represents sending the information for confirming the registration.

A process P205 represents sending information about customer including product Number, including such as a name of the product and a serial number. The information sent in the process P205 is described later. If the information sent in the process P205 is appropriate, the Manufacturer Server 2 sends data for displaying a Web Page informing which services are available in a process P207. By using this Web Page, the customer select a desirable service for returning items and information of the selected service is sent to the Manufacturer Server 2 in a process S208. According to the information sent in the process P208, the Manufacturer Server 2 sends data for sending Label Data representing a label to be used for returning items or sending necessary information for Bulk Return in a process P209. If the Bulk Return is selected, the Manufacturer Server 2 also send data corresponding to instruction to bring a box with a label data displayed on the box in a process P210.

In this embodiment, such Label Information is sent with additional information embedded by using barcodes or watermarks.

Obviously, there exist many correspondences between the Manufacturer Sever 2 and Customer PC 4. However, in the Figure 2, such correspondences are often not shown, but described below.

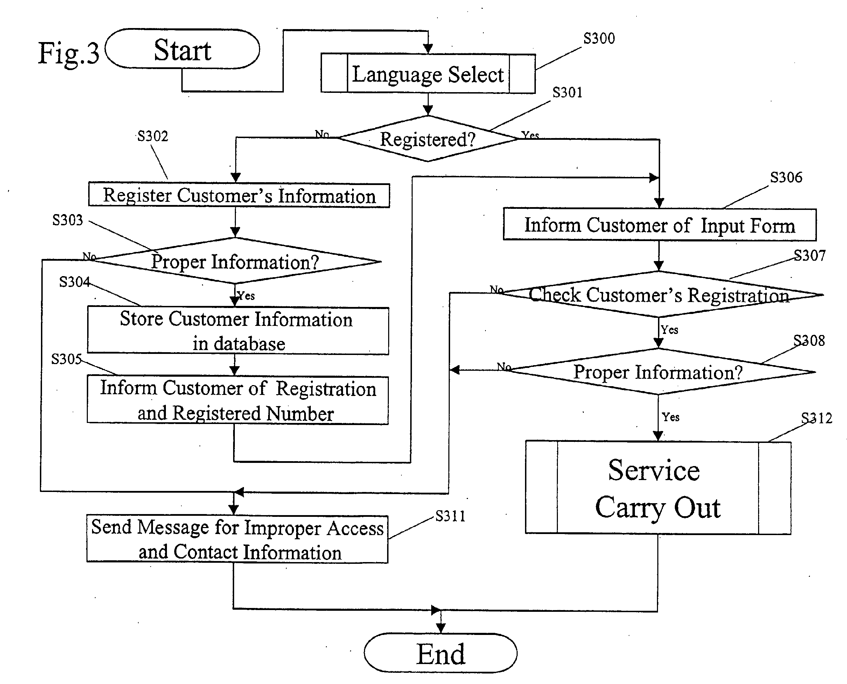

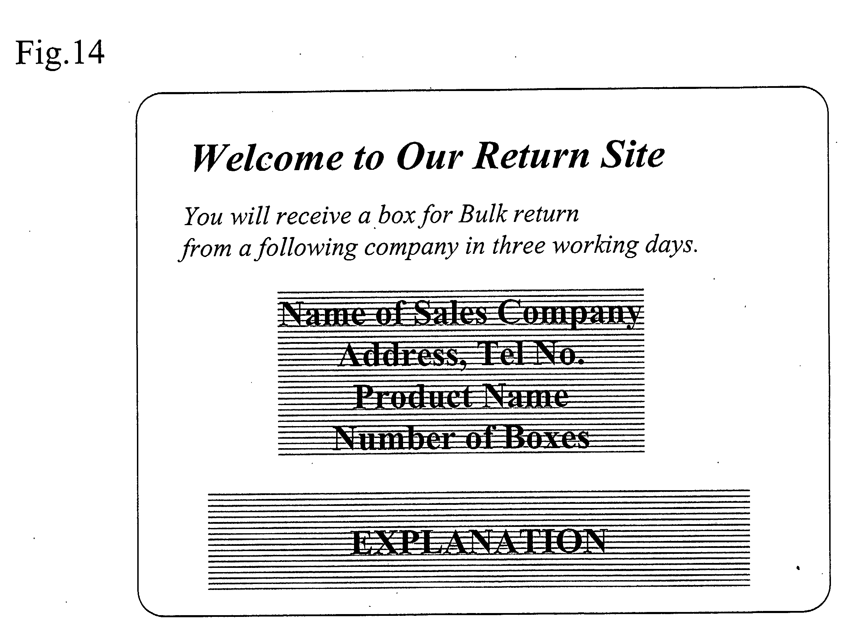

To make these processes carried out in this embodiment detailed, concrete processes carried out in this embodiment are now described by using Figures 3 through 15.

First, when the customer access the Web Site created by the Manufacturer Server 2 via Customer PC 4, data representing the Web Page asking the language which the customer would like to use is sent to the Customer PC 4 from the Manufacturer Server 2. After selecting languages, each Web Page is shown in the selected language. These programmes are well known and are executed in a sub-routine step S300.

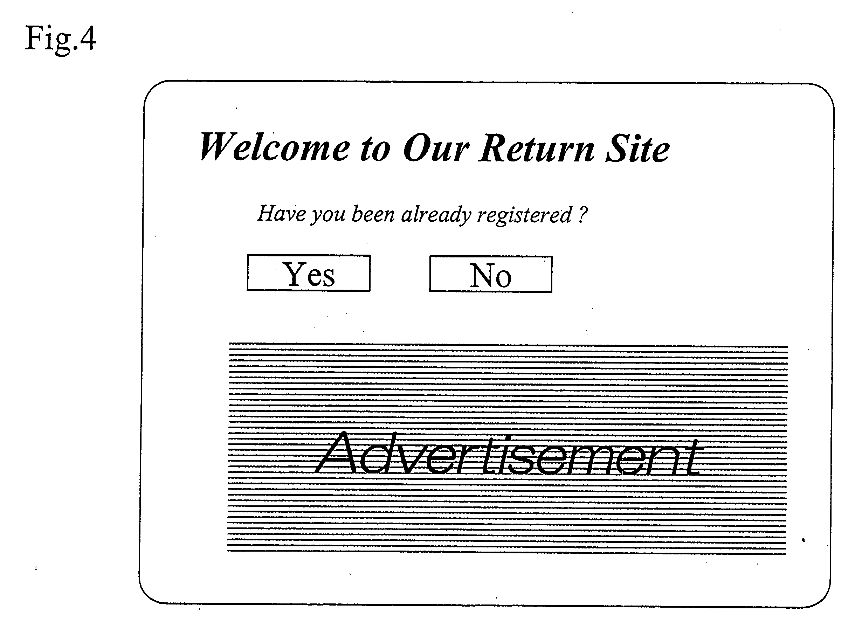

After this step S300, data representing the Web Page shown in figure 4 is sent to the Customer PC 4 from the Manufacturer Server 2. Obviously the Manufacturer Server has a function to make up such a Web Page by using well-known method, namely VRML, HTML, XML or other known languages.

As shown in the Figure 4, such a Web Page may include some text and pictures for the purpose of advertisement. According to this embodiment, this page shows operable rectangular areas with "Yes" and "No'" to be clicked by the customer by using input devices with seeing the displayed page. Since, the text "Have you been already registered?" is shown via a display included in the Customer PC 4, "Yes" means that the customer declares his or her registration. In the step S301 of the Figure 3, the Manufacturer Server receives the result of such customer's declaration.

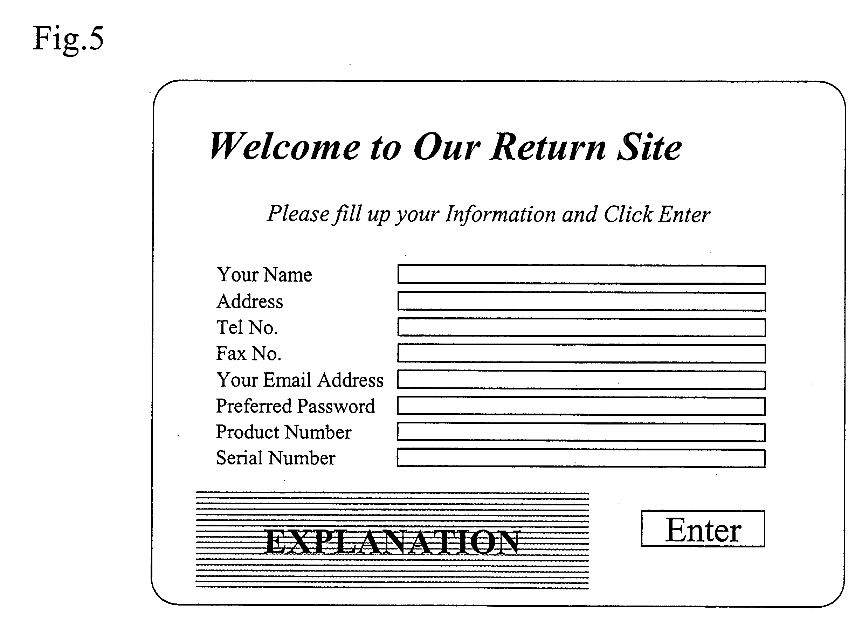

If the customer click "No" in a step S301, process goes to a step S302 for registering the customer's information. In the step S302 Manufacturer Server 2 automatically prepare the next Web Page as shown in the Figure 5. As shown in the Figure 5, this Web Page is prepared to make customer input his or her information, including a name, an address, a telephone number, a facsimile number, an email address, a password, a product number, and serial number of the product. Besides, according to the Figure 5, explanation how to fill up such information is described below input columns for these information.

When the customer clicks "Enter" after filling up these information, all of the information shown in Figure 5 is sent to the Manufacturer Server 2 in the step S302. Then the Manufacturer Server 2 checks whether some of the information is proper or not in a step S303. The Manufacturer Server 2 refer the database for checking whether input product name actually exists and input serial number comply with a rule of numbering by checking a number of digits or its order, for example.

If the check executed in the step S303 indicates that information is proper, the process goes to a step S304. If not, process goes to a step S311. In the step S311, the Manufacturer Server 2 send another Web-Page to the Customer PC 4 which includes message that this access is made with improper information. The Web Page sent in the step S311 also includes the message informing of contact information by which the customer knows how to solve this problem. Then process is finished.

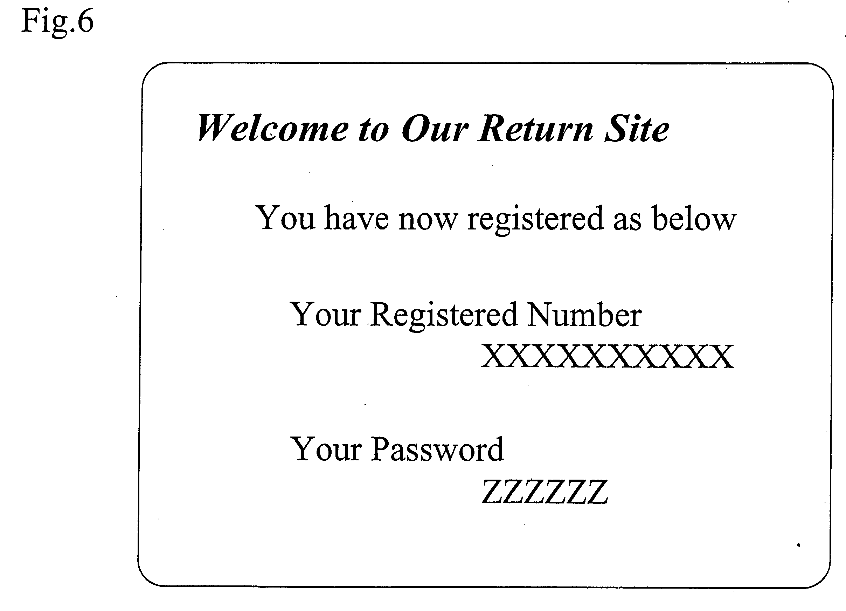

On the other hand, if information is proper, the Manufacturer Server 2 stores the information sent from the customer into the database 2a and go to a step S305. In the step S305, the Manufacturer Server 2 send another Web Page as shown in Figure 6 informing that the registration has been done with a registered number of the customer and a corresponding password thereto, and go to a step S306 automatically.

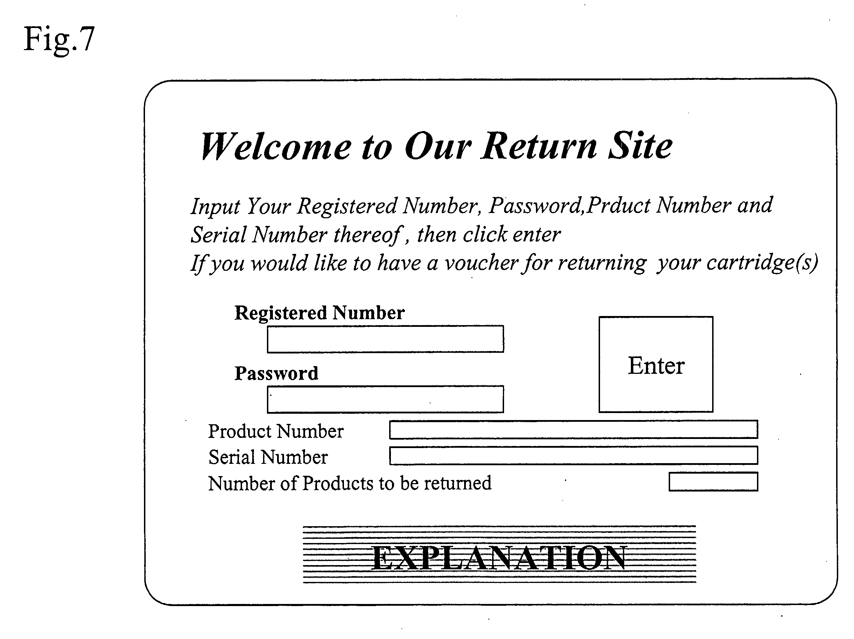

If the customer clicks "Yes" in the step S301, the process goes to the step S306 as well. In the step S306, the Manufacturer Server 2 send another Web Page as shown in Figure 7 asking the customer fill up the registered numbers, the password, the product number, the serial number thereof and a number of products to be returned. As shown in Figure 7, explanation how to fill up such information is similarly described to Figure 5.

In this step S306, it is possible to ask the customer just registered by the steps 303-305 only information excluding the product number and serial number thereof, since it is supposed that these are not changed.

After the customer fills up the information shown in Figure 7 and clicks "Enter", the Manufacturer Server check whether input register number and password have been registered or not by referring the database 2a thereof in a step S307 and whether input serial number and product number are proper or not as same as the step S303.

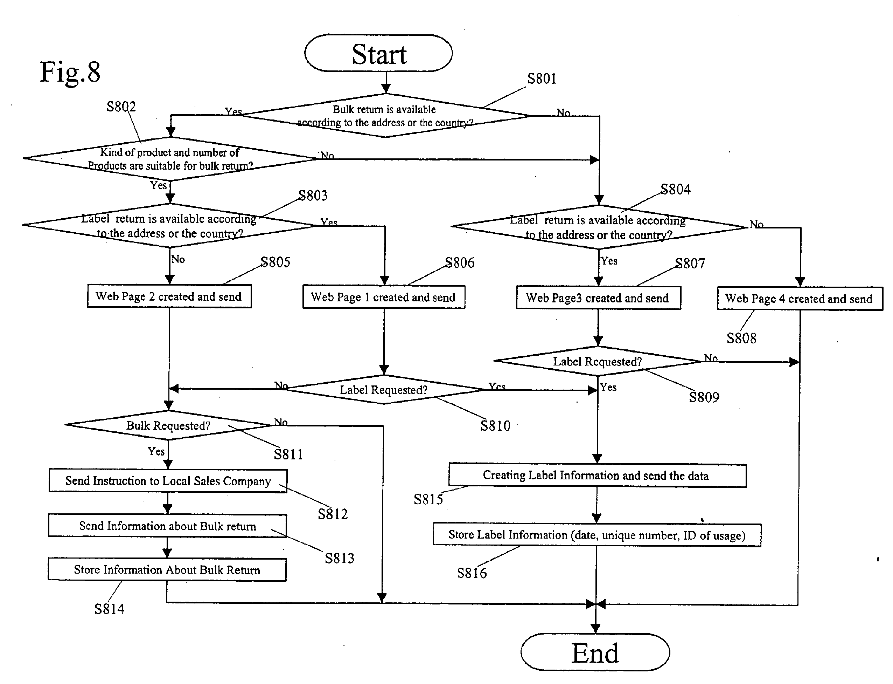

If input product number and serial number are proper as described as the step S303 and the customer has already registered with the registered number and a proper password, the process goes to a sub-routine step S312 described later by using Figure 8. Otherwise, the process goes to the step S311 and the process is finished after sending the Web Page including messages as mentioned above.

On the other hand, in the sub-routine step S312, the Manufacturer Server 2 executes programmes shown in Figure 8.

In a step S801, the Manufacturer Server 2 checks whether Bulk Return is available or not in accordance with information obtained in the steps S304, S305 and S306. In detail, the Manufacturer Server 2 refers its database 2a so as to check the location of the customer is close to the nearest local sales company among local sales companies registered in the database 2a or not. For example, it is decided based on the distance from the location of the customer and the location of the nearest local sales company. It is also decided simply, by using the country of the customer so as to check if there is the local sales company in the country. Of course, the country can be decided by the language itself in Europe to reduce the input item.

If it is checked that the Bulk Return is available in the step 801, the process goes to a step S802. In the step 802, the Manufacturer Server 2 checks a kind of products to be returned by the customer and a number of the products to be returned. Then, the Manufacturer Server 2 decides whether the return using a box (Bulk Return) is efficient or not. If so, the Manufacturer Server 2 makes the Bulk Return and the process goes to a step S803. If not, the Manufacturer Server 2 makes the Bulk return unavailable and the process goes to a step S804.

In the step S803, the Manufacturer Server 2 checks whether Label Return is available or not in accordance with information obtained in the steps S304, S305 and S306. In detail, the Manufacturer Server 2 refers its database 2a so as to check the location of the customer is close to the nearest carrier among carriers registered in the database 2a or not. For example, it is decided based on the distance from the location of the customer and the location of the nearest carrier. It is also decided simply, by using the country of the customer so as to check if there is the carrier contracted with the manufacturer in the country.

If it is checked that the Bulk Return is unavailable in the step S801 or inefficient in the step S802, the process goes to a step S804. In the step S804, the Manufacturer Server 2 checks whether the Label Return is available or not in accordance with information

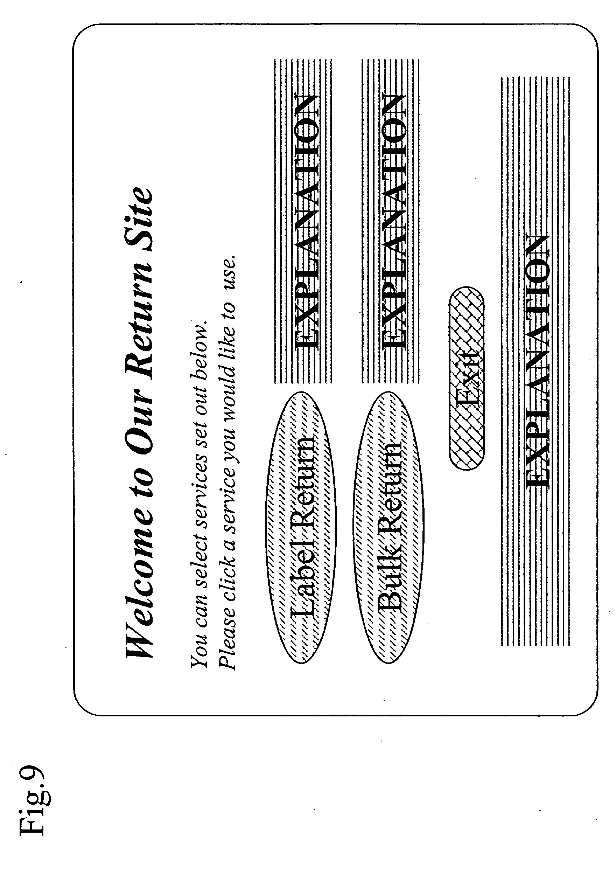

Through the steps S801, S802, S803 and S804 described above, each of Bulk Return and Label Return is to be prepared or not. If both services are to be prepared, the Manufacturer Server 2 send data representing a Web Page (Web Page 1) shown in Figure 9 in a step S806. As shown in the Figure 9, in this Web Page, the customer can select one of Bulk Return and Label Return by clicking oval operable parts of the Web Page which are respectively accompanied with the text of "Bulk Return" and "Label Return". If the customer would not like to use neither service, the customer can click an operable part accompanied with the text "Exit" shown in the Figure 9.

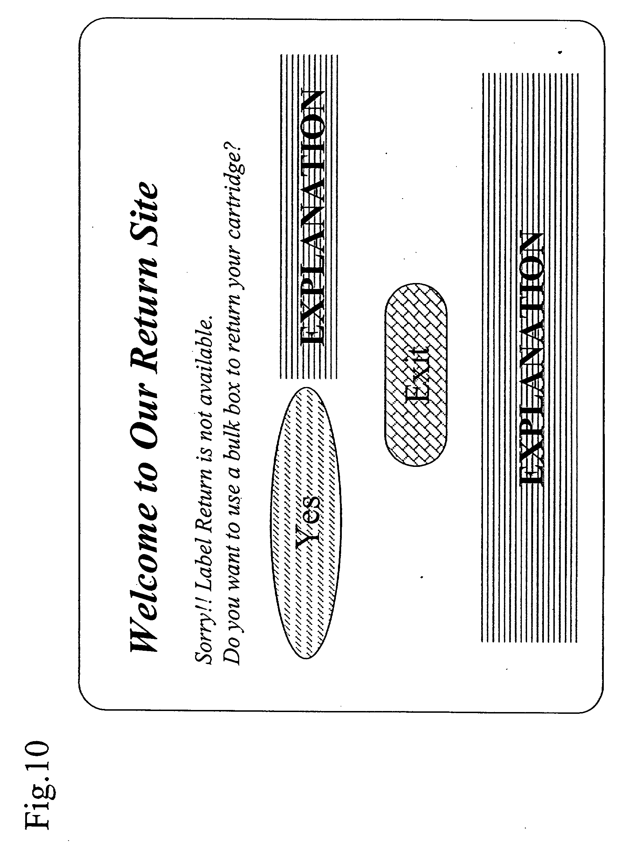

If only the Bulk Return is to be prepared, the Manufacturer Server 2 sends data representing a Web Page (Web Page 2) shown in Figure 10 in a step S805. The customer can use the Bulk Return clicking an oval operable part accompanied with the text of "Yes". If the customer would not like to use the Bulk Return, the customer can click an operable part accompanied with the text "Exit" shown in the Figure 10.

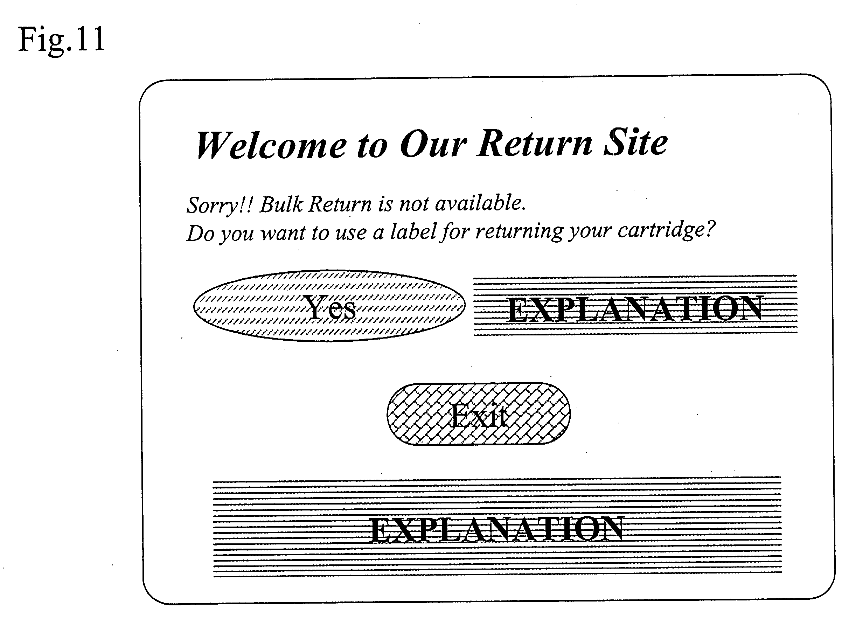

If only the Label Return is to be prepared, the Manufacturer Server 2 send data representing a Web Page (Web Page 2) shown in Figure 11 in a step S807. The customer can use the Label Return clicking an oval operable part accompanied with the text of "Yes". If the customer would not like to use the Label Return, the customer can click an operable part accompanied with the text "Exit" shown in the Figure 11.

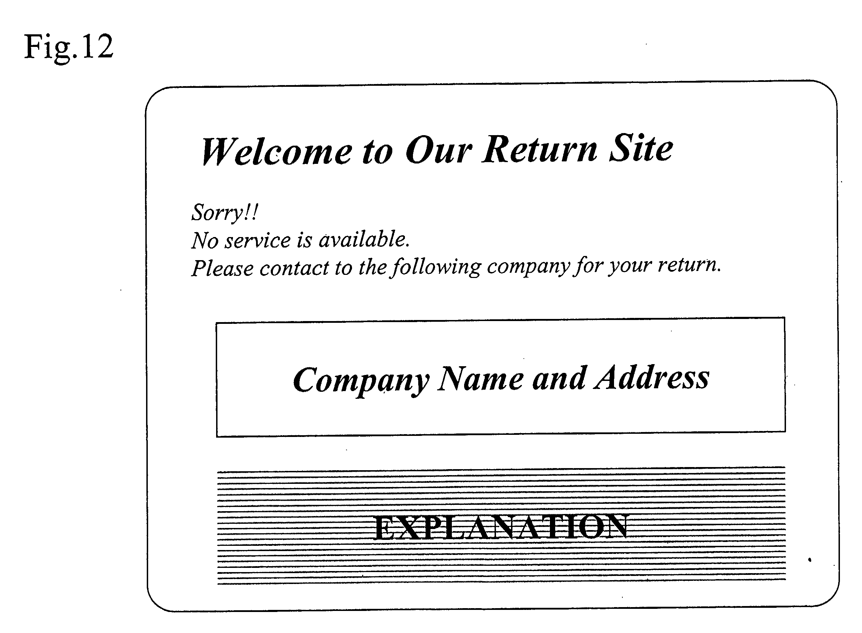

If neither the Bulk Return nor the Label Return is to be prepared, the Manufacturer Server 2 send data representing a Web Page (Web Page 2) shown in Figure 12, informing no service is available in a step S808. However, to encourage the customer who is keen to returning items, the company name and the address are informed so that the customer connect to seek possible return for items. After data representing the Web Page shown in the Figure 12, the process ends.

If the customer decides to use the Bulk Return, namely clicking the text of "Bulk Return" through the Web Page shown in the Figure 9 or the text of "Yes" through the Web Page shown in the Figure 10 (a step S811), the Manufacturer Server 2 sends instruction to the LSC Server 8 to send an empty box to be filled by items to the customer in a step 812. Then, the Manufacturer Server 2 sends data corresponding to a Web Page informing the customer necessary information in a step S813, such as a name of the local sales company, its address and telephone number, and a number of boxes to be sent. All such information is fetched by the database 2a. As for the number of boxes, it is decided by using the information relating to the number of the products and the name of the product obtained in the steps S304, S305 and S306.

After the step S813, the Manufacturer Server 2 stores the information about Bulk Return, for example times the customer uses the Bulk Return and a number of the boxes sent to the customer. After the step S814, the process ends.

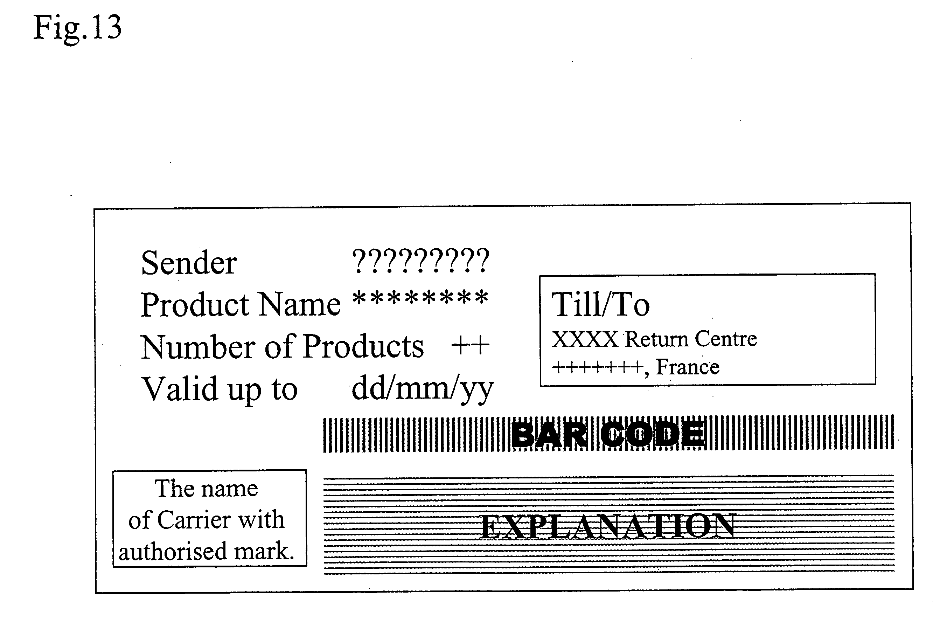

If the customer decides to use the Label Return, namely clicking the text of "Label Return" through the Web Page shown in the Figure 9 or the text of "Yes" through the Web Page shown in the Figure 11 (a step S809 or S810), a pre-authorised label to be used for returning cartridges shown in Figure 13 is created in the Manufacturer Server 2 in a step S815. In this step S815, the Manufacturer Server 2 firstly creates some kind of unique information about the label including a unique number for each label, date indicating when the label is sent (sending date), and a product number. These information, namely the unique number, the date and the product number, are supplied to the encoder 2b.

Information including the registered number, a name of the customer as a sender, the product name, number of the products, and the sending date are also supplied to the label creator 2d. The label creator 2d creates image data as shown in the Figure 13 by using such information. As for a date for expiration, namely the date shown next to the text of "Valid up to" is calculated by using the sending date. For example, the expiration date is set as a date 2 month after the sending date.

As for the name of the Carrier and the destination shown under the text of Till/To are created in the label creator 2d by referring database 2a to select a suitable Carrier and a suitable destination, namely a plant or recycle centre, based on address information of the customer obtained from the registered number.

As for the barcodes, the label creator 2d receives the encoded barcodes from the BC & WM encoder 2b and simply add the encoded barcodes including the information described above, namely the unique number, the expiration date and the product number, on the label as shown in the Figure 13. After adding the encoded barcodes, image shown in the Figure 13 is once sent to the BC & WM encoder 2b and is encoded to add watermarks for embedding the information described above latently. Finally, the BC & WM encoder 2b send the watermarked image to the label creator 2d again and the encoded label data is sent to the Customer PC 4 from the Manufacturer Server 2 in the step S815.

Immediately after sending the label data, the Manufacturer Server 2 stores the Label Information as a combination of the unique number, the expiration date and the product number in the step S816 and ends the process.

As described above, according to this embodiment, only available service are to be used by the customer through the Web Pages shown in the Figure 9, 10, 11, and 12. Therefore, the customer cannot use the service that is unavailable or inefficient. This causes significant advantage so that workloads for both manufacturer and customers are largely decreased, even if one or more returning service or services are unavailable in the location of the customer, since inefficient or incorrect request from the customer is never happened.

Further, this embodiment introduce a flexible returning system even when the customer moves with minimising the cost to encourage customers to return their consumed items without significant additional workloads of both the manufacturer and customer.

Also as described above, the label data sent from the Manufacturer Server 2 includes information to be used for restricting usage of each label. Accordingly improper usage of the label is effectively prohibited as described later.

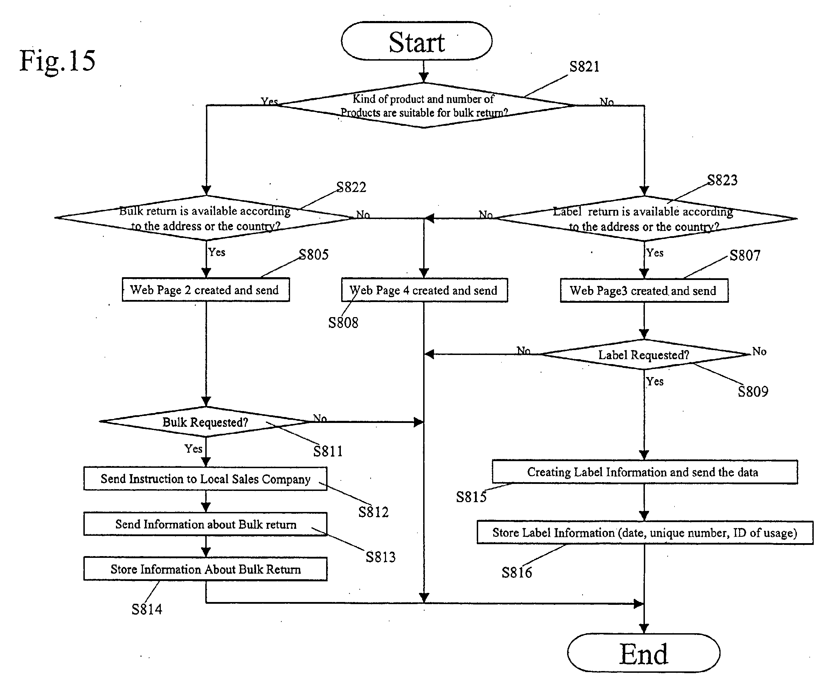

Figure 15 shows another example how to prepare a Web Page for the customer. In short, a flow chart shown in the Figure 15 shows another example of the sub-routine step S312. Difference between programmes shown in Figure 8 and Figure 15 is that the programme shown in Figure 15 only gives one service which is automatically decided.

Referring the Figure 15, in a step S821, the Manufacturer Server 2 checks a kind of products to be returned by the customer and a number of the products to be returned to decide whether the return using a box (Bulk Return) is efficient or not similarly to the step S802. In this example, if the Bulk Return is efficient, the process goes to a step S822 and the Label Return would not be used. On the other words, according to the result of the step S821, only one service being suitable for returning items is automatically decided.

Then the process goes to a step S822 or a step S823 and checks availability of the Bulk Return and the Label Return as the same as the step S801 and S803. This example causes an advantage that the manufacturer can designate most efficient service for the manufacturer.

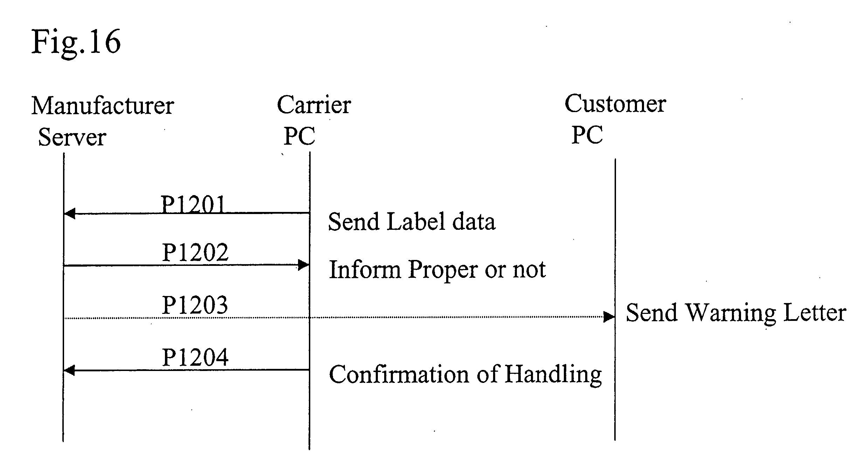

After sending the label data, the customer instructs the Customer PC 4 to send the label data to a printer 5 for printing the label corresponding to the label data. The customer takes the printed label to the carrier. Then, the customer ask the carrier to transport the items to the designated destination displayed on the printed label. Figure 16 shows rough processes taken at the Carrier PC for making understanding easy.

The carrier receiving the printed label from customer firstly scans the printed label by using the scanner 7 as image data. The carrier make the Carrier PC to send the imaged data of the label scanned by the scanner 7 to the Manufacturer Server 2 via the network 1 in a process P1201 shown in the Figure 16. The Manufacturer Server 2 check whether the label is proper to be used or not by using the image data of the label received.

As mentioned above, the image data of the label included information encoded as the bar codes and encoded by watermarking. The Manufacturer Server 2 sends the image data received by the Carrier PC 6 to the BC & WM decoder to decode the information including the unique number, the expiration date and the product number. Then the Manufacturer Server 2 checks whether the label to be used is proper or not and sends checked result to the Carrier PC 6 in a process P1202 shown in the Figure 16.

If the Manufacturer Server 2 judges that the label to be used is improper one, the Manufacturer Server 2 send a warning letter to the Customer PC 4 by using email system via the network 1 in a process P1203. On the other hand, the Manufacturer Server 2 judges that the label to be used is proper one, the Carrier PC 6 informs the Manufacturer Server 2 to confirm that the carrier handle the consumed items to transport to the destination shown in the label in a step P1204.

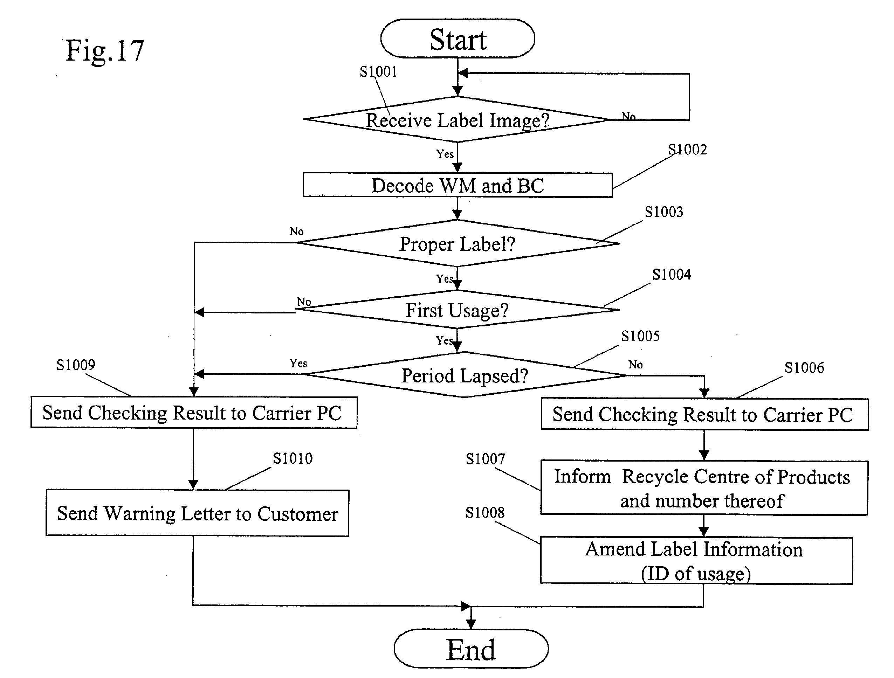

To make these processes carried out in this embodiment detailed, concrete processes carried out in this embodiment are now described by using Figures 17. A flow chart shown in the Figure 17 represents programmes executed in the Manufacturer Server 2.

As shown in the Figure 17, when the Manufacture Server 2 receives the image data of the label from the Carrier PC 6, the process is shifted from a step S1001 to a step S1002. In the step S1002, the Manufacturer Server 2 sends the image data of the label to the BC & WM decoder 2c. The BC & WM decoder 2c decodes the barcodes contained in the image data and decodes the watermarks embedded in the image data. The decoder 2c outputs the information including the unique number, the expiration date and the product number.

In accordance with the decoded information, the Manufacturer Server 2 judges whether the label to be used is proper or not in steps S1003, S1004 and S1005. In the step S1003, the Manufacturer Server 2 compares the decoded information obtained from barcodes with the decoded information obtained from the watermarks. If the decoded information is different from each other, the Manufacturer judges that the label to be used is improper, since there are a possibility of modification of the label, especially that the barcodes are modified. Also in the step S1003, the Manufacturer Server 2 checks whether the combination of the product number and the unique number is stored in the database 2a. If the combination obtained from the decoded information is not stored, the Manufacturer judges that the label to be used is improper, since there are a possibility of modification of the label. If the Manufacturer Server 2 judges that the label is improper in the step S1003, the process goes to a step S1009.

On the other hand, if the Manufacturer Server 2 judges that the label is proper in the step S1003, the process goes to a step S1004. In the step S1004, the Manufacturer Server 2 checks by referring the database whether the label having the unique number has been used or not. If it has been used, the Manufacturer Server judges that the label is improper, since it is possible that the label to be used has been copied or modified. If it is judged in the step S1004 that the label is improper, the process goes to the step S1009. If not, the process goes to the step S1005.

The customer and the carrier can see the expiration date shown in the label to be used. Therefore only the fact that the label data sent from the Manufacturer Server 2 to the Customer PC 4 includes such visible data about the expiration date is effective to prevent from improper usage of the label. For example, even it somebody steels or accidentally finds lost labels, these lost labels cannot be used. Further this embodiment cares about this kind of usage, even if the carrier overlooks the expiration of the label or displayed expiration date has been modified.

In the step S1005, the Manufacturer Server 2 checks the expiration date obtained from the image data of the label and judge whether the label is still usable or not. This prevents from improper usage of the label modified or edited. If the expiration date obtained from the image data of the label is gone, the process goes to the step S1009.

In the step S1009, the Manufacturer Server 2 sends the checking result that the label is improper to the Carrier PC 6. Then, the carrier can reject using the improper label. Following the step S1009, the Manufacturer Server 2 also send the warning letter to the customer corresponding to the unique number to inform that the label send to the customer may modified, copied or faked in a step S1010. After the process of the step S1010 is executed, the Manufacturer Server 2 ends the process.

On the other hand, if the label to be used is proper in steps S1003, S1004 and S1005, the process goes to a step S1006. In the step S1006, the Manufacturer Server 2 sends the checking result that the label is proper to the Carrier PC 6. Then, the carrier can accept using the label. Accordingly usage of the label is authorised and the usage will carried out. Therefore, the Manufacturer Server 2 informs the Plant PC 3 of the fact that the product (empty cartridge) will reach the plant or recycle centre in a step S1007. This helps the recycle centre or the plant to control their recycling work.

Following the step S1007, the Manufacturer Server rewrite the database so as to store the fact that the label corresponding to the unique number has been used. This information is used in the step S1004 later. After the step S1007, the process ends.

According to the embodiment described above, any improper usage of the label would be prohibited. Concretely, using modified labels, fake labels, lost labels or copied labels become impossible. Accordingly, the embodiments described above resolves the drawback caused by the possibility of modifying, copying, and faking labels, even if the label is sent to the customer as the label data via the network.

In the embodiment described above, the BC & WM decoder 2c is located in the Manufacturer Server 2. However, there is another option that the BC & WM decoder 2c is located in the Carrier PC 6 by sending a decoding programme from the Manufacturer Server 2 to the Carrier PC 6 or by installing such a program. In this option, installing or sending programme to each of the Carrier PCs would be necessary and this cause some workloads. However, in term of corresponding time, this option has advantage. Because, if the Carrier PC can decode BC and WM, only the decoded information is transferred from the Carrier PC 6 to the Manufacturer Server 2. Therefore, the corresponding time is reduced.

The above-described embodiments restrict the usage of the printed label by checking all of whether the label is expired, whether the label has been used. However, only a method, programme and device in which one kind of checking is carried out for restricting the usage are within the scope of this invention.

Although limited embodiments are only described in the specification, it is possible to change the embodiments to the extent of the scope of claims.

As described above, this invention creates or introduces method, programme or device which gives advantages as follows.

The customer can select only efficient and available services. Accordingly, both of the manufacturer and customer can decrease workloads, even if a certain returning service or services are unavailable in certain locations.

The manufacturer can introduce a flexible returning system even when the customer moves with minimising the cost to encourage customers to return their consumed items without significant additional workloads of both the manufacturer and customer.

This invention introduces, as one aspect, a method for handling data to be used for returning items; comprising steps of receiving information via a network from a device of a customer connected to the network, deciding whether each of a plurality of services is to be prepared or not in accordance with the information received in the receiving step, the plurality of services being individually used for returning items from the customer, preparing a page relating to the services based on the decision decided in the deciding step, and sending data of the page to a customer. Accordingly returning items is encouraged in any location where only a restricted returning service or services are available with a little additional cost.

## Claims

1. A method for handling data to be used for returning items; comprising steps of
receiving information via a network from a device of a customer connected to the network;
deciding whether each of a plurality of services is to be prepared or not in accordance with the information received in the receiving step, the plurality of services being individually used for returning items from the customer;
preparing a page relating to the services based on the decision decided in the deciding step; and
sending data of the page to a customer.

2. A method according to claim 1, wherein the information includes information relating to location of the customer.

3. A method according to claim 2, wherein the information relating to the location includes information of address input by the customer.

4. A method according to claim 2, wherein the information relating to the location includes information of country input by the customer.

5. A method according to claim 2, wherein the information relating to the location includes information of language selected by the customer.

6. A method according to claim 1, wherein the information includes information relating to items to be returned.

7. A method according to claim 6, wherein the information relating to items includes a number of items to be returned.

8. A method according to claim 6, wherein the information relating to items includes a kind of item to be returned.

9. A method according to claim 1, wherein the services including a service sending a label to be printed and to be used for returning items.

10. A method according to claim 9, wherein the information includes information relating to location of the customer and the service sending the label is decided to be prepared in accordance with the information relating to location.

11. A method according to claim 10, wherein the service sending the label is decided to be prepared with selecting a carrier to transfer the item based on the label among a plurality of carriers in accordance with the information relating to location.

12. A method according to claim 1, wherein the services including a service sending a box to be returned with a plurality of items to be contained therein.

13. A method according to claim 12, wherein the information includes information relating to location of the customer and the service sending the box is decided to be prepared in accordance with the information relating to location.

14. A method according to claim 13, wherein the service sending the box is decided to be prepared with selecting a company to send the box among a plurality of companies in accordance with the information relating to location.

15. A method according to claim 12, wherein the information includes information relating to items to be returned and the service sending the box is decided to be prepared in accordance with the information relating to items.

16. A method according to claim 1, wherein one of the services to be prepared is automatically selected in accordance with the information received in the receiving step.

17. A method according to claim 16, wherein in the deciding step, it is further decided whether the selected one of the services is to be prepared or not in accordance with the information received in the receiving step.

18. A set of computer programmes to be used for returning items; comprising
programme for receiving information via a network from a device of a customer connected to the network;
programme for deciding whether each of a plurality of services is to be prepared or not in accordance with the information received by the receiving programme, the plurality of services being individually used for returning items from the customer;
programme for preparing a page relating to the services based on the decision decided by the deciding programme; and
programme for sending data of the page to a customer.

19. A set of computer programmes according to claim 18, wherein the information includes information relating to location of the customer.

20. A set of computer programmes according to claim 19, wherein the information relating to the location includes information of address input by the customer.

21. A set of computer programmes according to claim 19, wherein the information relating to the location includes information of country input by the customer.

22. A set of computer programmes according to claim 19, wherein the information relating to the location includes information of language selected by the customer.

23. A set of computer programmes according to claim 18, wherein the information includes information relating to items to be returned.

24. A set of computer programmes according to claim 23, wherein the information relating to items includes a number of items to be returned.

25. A set of computer programmes according to claim 23, wherein the information relating to items includes a kind of item to be returned.

26. A set of computer programmes according to claim 18, wherein the services including a service sending a label to be printed and to be used for returning items.

27. A set of computer programmes according to claim 26, wherein the information includes information relating to location of the customer and the service sending the label is decided to be prepared in accordance with the information relating to location.

28. A set of computer programmes according to claim 27, wherein the service sending the label is decided to be prepared with selecting a carrier to transfer the item based on the label among a plurality of carriers in accordance with the information relating to location.

29. A set of computer programmes according to claim 18, wherein the services including a service sending a box to be returned with a plurality of items to be contained therein.

30. A set of computer programmes according to claim 29, wherein the information includes information relating to location of the customer and the service sending the box is decided to be prepared in accordance with the information relating to location.

31. A set of computer programmes according to claim 30, wherein the service sending the box is decided to be prepared with selecting a company to send the box among a plurality of companies in accordance with the information relating to location.

32. A set of computer programmes according to claim 29, wherein the information includes information relating to items to be returned and the service sending the box is decided to be prepared in accordance with the information relating to items.

33. A set of computer programmes according to claim 18, wherein one of the services to be prepared is automatically selected in accordance with the information received by the receiving programme.

34. A method according to claim 33, wherein by programme for deciding, it is further decided whether the selected one of the services is to be prepared or not in accordance with the information received by the receiving programme.

35. A device for handling data to be used for returning items, the device being connected to a network to which a device of a customer is connected, the device comprising;
receiving means for receiving information via a network from a device of a customer connected to the network;
deciding means for deciding whether each of a plurality of services is to be prepared or not in accordance with the information received by said receiving means, the plurality of services being individually used for returning items from the customer;
preparing means for preparing a page relating to the services based on the decision decided by said deciding means; and
sending means for sending data of the page to a customer.

36. A device according to claim 35, wherein the services including a service sending a label to be printed and to be used for returning items.

37. A device according to claim 36, wherein the information includes information relating to location of the customer and said deciding means decides that the service sending the label is to be prepared in accordance with the information relating to location.

38. A device according to claim 37, wherein said deciding means decides that the service sending the label is to be prepared with selecting a carrier to transfer the item based on the label among a plurality of carriers in accordance with the information relating to location.

39. A device according to claim 35, wherein the services including a service sending a box to be returned with a plurality of items to be contained therein.

40. A device according to claim 39, wherein the information includes information relating to location of the customer and said deciding means decides that the service sending the box is to be prepared in accordance with the information relating to location.

41. A device according to claim 40, wherein said deciding means decides that the service sending the box is to be prepared with selecting a company to send the box among a plurality of companies in accordance with the information relating to location.

42. A device according to claim 39, wherein the information includes information relating to items to be returned and said deciding means decides that he service sending the box is to be prepared in accordance with the information relating to items.

43. A device according to claim 1, wherein said deciding means automatically selects one of the services to be prepared in accordance with the information received by said receiving means.

44. A method according to claim 43, wherein said deciding means further decides whether the selected one of the services is to be prepared or not in accordance with the information received by said receiving means.
